# EUROPEAN PATENT APPLICATION

(11) **EP 1 892 453 A1**
(43) Date of publication of application: **27.02.2008**
(21) Application number: 07016482.7
(22) Date of filing: 22.08.2007
(51) Int. Cl.: F16M 11/04

(54) **Locking device for computer equipment extension arm**

(30) Priority: 25.08.2006 US 510393
(71) Applicant: Innovative Office Products, Inc., Easton, PA 18040 (US)
(72) Inventor: Derry, Bradley A., Easton PA 18042 (US); Oddsen, Odd N. Jr., Easton PA 18040 (US)
(74) Representative: Behm, Sonja Marianne

(57) **Abstract**

The present invention provides a locking device for a computer equipment extension arm (100). The locking device prevents theft of electronic equipment by securely fastening an equipment extension arm to another object, such as a piece of furniture, a wall, a section of an office cubicle, etc. Specifically, a locking member (120) is provided, which prevents the equipment extension arm (100) from being removed from the mounting assembly (102). Additionally, uncommon or specially shaped fastener heads may be provided to prevent tampering.

## Description

### BACKGROUND OF THE INVENTION

The present invention relates to a device for securing electronic equipment. More particularly, the present invention relates to a locking device for use on a variety of versatile equipment extension arms.

Currently, there exist different equipment extension arms. One such extension arm is shown and described in pending U.S. Application No. 11/141,348, filed May 31, 2005, and entitled "Angled Mini Arm Having a Clevis Assembly," the entire disclosure of which is fully incorporated by reference herein. Such extension arms are quite versatile and can be used to support a variety of electronic devices, such as flat panel displays, keyboards, etc. Many of these electronic devices can be quite expensive, and there is, therefore, a need to protect these devices from theft, removal, or falling.

Many of these extension arms are able to fasten the equipment securely to the arm itself. However, such extension arms often do not provide ways of sufficiently securing the extension arms themselves to the workspaces on which they are mounted, such as desks, walls, and cubical dividers. Therefore, such extension arms may not prevent someone from disengaging the extension arm itself from whatever workspace object it is secured to and removing both the equipment and the extension arm together. This may be particularly easy to do, since such extension arms can often be rather compact and lightweight. Therefore, a need exists for better securing such equipment extension arms to other workspace objects.

### SUMMARY OF THE INVENTION

A typical equipment extension arm is mounted to a mounting assembly by inserting the shaft on the lower endcap into a mounting member. The present apparatus includes a locking member, which is fastened to the bottom of the shaft. Such locking member includes a plurality of flexible locking tabs.

In one example of the present invention, the locking member may be secured to the bottom of the shaft by a threaded bolt. Alternatively, the locking member may be incorporated into the manufacture of the shaft as a single piece. In another alternative, the locking member may be a separate piece, but may be welded onto the bottom of the shaft.

One embodiment of the present invention includes a bushing, which is inserted into the mounting member before the shaft is inserted into such mounting member. The bushing may be secured to the mounting member by sizing it so that it must be press fit into the receptacle of the mounting member. Alternatively, an adhesive, such as glue or cement, may be placed between the outer surface of the bushing and the inner surface of the mounting member. In yet another alternative, the bushing may be secured to mounting member by means of a set screw or other fastener.

When inserting the shaft into the mounting member, the locking tabs may be compressed inwards while passing through the bushing. Preferably, once passing the bottom surface of the bushing, the locking tabs may flex outwardly and such bottom surface may become a locking surface, preventing the locking member from moving up past the bushing. In this way, the extension arm may not be easily separated from the mounting assembly, and the tabs of the locking member will preferably be disposed within the receptacle of the mounting member, where they may not be easily tampered with. Additionally, the shaft and the extension arm will preferably remain free to rotate. In order to allow the extension arm to rotate more easily, the inner surface of the bushing may be coated with polytetrafluoroethylene ("PTFE"), commonly sold under the brand name TEFLON^{®} by E.I. DuPont de Nemours and Company. Grease or some other lubricating material may alternatively be employed.

In another alternative, the bushing may or may not be included, but a protruding rim may be included on the inner surface of the mounting member. Such rim may act as a locking surface and may similarly prevent the locking member from lifting up out of the mounting member. Additionally, in order to permit the extension arm to rotate more easily, the inner surface of the mounting member or the inner surface of the bushing, if provided, may be coated with a lubricating substance, as described above.

In another alternative, the bushing may or may not be included, but the inner surface of the mounting member may be provided with ratcheting teeth, which may act as a locking surface. In this manner, the locking tabs on the locking member will preferably be secured by such teeth, thus preventing the extension arm from being lifted out of the mounting member. As in the previously described embodiments, the inner surface of the mounting member or the inner surface of the bushing, if provided, may be coated with a lubricating substance.

Additional features may be provided in accordance with the present invention, but such features may not be present in all of the embodiments. Such features relate to the securing of the mounting assembly to different workspace objects, including a piece of furniture such as a desk, a wall such as a slat wall, a section of an office cubicle, etc.

In one such embodiment, the extension arm may be mounted to a desk. The mounting assembly may further provide a clamping assembly, which includes a threaded bolt for threadedly clamping on to the underside of the desk. Instead of providing a knob on the head of the bolt, however, additional security may be provided by including a specially shaped drive design on the head of such bolt, which requires a specialized tool adapted to fit the particular socket configuration in order to loosen the bolt.

An alternative embodiment for mounting the extension arm to a desk may not include the clamping assembly. Instead, the mounting member may be provided with a threaded opening on the bottom surface thereof. In this manner, the mounting member may be mounted directly onto the desk or other mounting surface by threadedly fastening a bolt through a hole in the surface of such desk and into the threaded opening. As in the previously described embodiment, such bolt head may also include an uncommon or nonstandard head, for additional security.

In other situations in which the extension arm is mounted to a wall, a desk, or elsewhere, a connecting member or bracket may be provided. Such bracket will preferably contain holes for screwing, bolting, or otherwise fastening such bracket to the wall. In order to provide additional security, in a similar manner to that described in the previous embodiments, such bolts or fasteners may contain uncommon or specially shaped heads requiring special tools to loosen.

In accordance with a preferred embodiment of the present invention, a locking apparatus for supporting an extension arm which positions a user device is provided. The locking apparatus comprises a mounting member and a locking member. The mounting member supports the extension arm. The mounting member has a receptacle therein aligned along an axis. The locking member is for securing the extension arm to the mounting member. The locking member includes a plurality of locking tabs for securing the locking member to the mounting member. The locking tabs are received within the receptacle of the mounting member.

In one alternative, the locking apparatus further includes a locking surface disposed within the receptacle. The locking surface is operable to engage the locking tabs to prevent removal of the locking member from the receptacle. In another alternative, each locking tab has a first end disposed on a central portion of the locking member and a second end remote therefrom. In this case, each locking tab is preferably substantially arcuate from the first end to the second end.

In a further alternative, the locking apparatus desirably further includes a bushing at least partly disposed within the receptacle of the mounting member, with the bushing being operable to permit the extension arm to rotate about the axis. In one example, the bushing is secured to the mounting member by a set screw. In another example, the locking surface is disposed on the bushing. Here, the bushing is preferably operable to receive a shaft of an endcap of the extension arm. Optionally, each locking tab has a first end disposed on a central portion of the locking member and a second end remote therefrom, and each locking tab is substantially arcuate from the first end to the second end.

In yet another example, the mounting member further includes a threaded opening disposed on a base surface thereof for fastening the mounting member to a work surface. In another example, the locking apparatus further includes a connecting member attachable to the mounting member, whereby the mounting member may be fastened to a work surface with the connecting member. The locking apparatus may further include a clamping assembly attached to the mounting member, whereby the mounting member may be clamped to a workspace object.

In accordance with another preferred embodiment of the present invention, a locking apparatus for supporting an extension arm that positions a user device relative to a workspace is provided. The locking apparatus comprises a mounting member for supporting the extension arm. The mounting member is operable to engage an endcap of the extension arm. The locking apparatus also comprises means for locking the endcap of the extension arm to the mounting member.

In one alternative, the locking means includes a locking member secured to the endcap. Here, the locking member is at least partly received within a receptacle in the mounting member. The locking member includes a plurality of locking tabs for securing the locking member to the mounting member. Each locking tab has a first end disposed on a central portion of the locking member and a second end remote therefrom. In a preferred example, each locking tab is substantially arcuate from the first end to the second end. In another preferred example, the first end and the second end define a line therebetween, with the line being at an angle of between 25º and 45º relative to the central portion. Optionally, the locking apparatus further includes a bushing at least partly disposed within the receptacle of the mounting member. The bushing is operable to receive the shaft. The bushing is operable to permit the extension arm to rotate about an axis. Here, the bushing has a locking surface disposed thereon, with the locking surface being operable to engage the second ends of the locking tabs.

In accordance with a further preferred embodiment of the present invention, a system for securing and positioning a user device relative to a workspace comprises an extension arm, a mounting member, a locking member and a locking surface. The extension arm is for positioning the user device relative to the workspace. The extension arm has an endcap at a first end thereof. The mounting member supports the extension arm and secures the extension arm to the workspace. The mounting member has a receptacle therein aligned along an axis. The receptacle is operable to receive a shaft of the endcap. The locking member is for securing the extension arm to the mounting member. The locking member is secured to the shaft of the endcap. The locking member includes a plurality of locking tabs for securing the locking member to the mounting member when the locking tabs are received within the receptacle of the mounting member. The locking surface is disposed within the receptacle. The locking surface is operable to engage the locking tabs to prevent removal of the locking member and the shaft of the endcap from the receptacle.

In one example, the locking member is integrally formed with the shaft on the endcap of the extension arm. In another example, the locking member is affixedly secured to the shaft on the endcap of the extension arm. In a further example, the locking member is secured to the shaft by a fastener.

Optionally, the system further includes an opening disposed on a base surface of the mounting member for fastening the mounting member to a surface of the workspace. Here, the opening is operable to provide access to a release mechanism of the locking member for disengaging the locking tabs from the locking surface when the base surface is not fastened to the workspace surface. For instance, a user may insert a tool to remove a fastener which secures the locking mechanism to the endcap of the extension arm. Upon removal of the fastener, the tabs of the locking mechanism can disengage from the locking surface, allowing the user to remove the shaft of the endcap from the mounting member. In this manner, the user may remove the extension arm, and any attached user device, from the mounting member.

In another alternative, the system further includes a clamping assembly attached to the mounting member, whereby the mounting member may be attached to a workspace object. The clamping assembly includes a clamping bolt for threadedly clamping onto the workspace object. In a further alternative, the system desirably further includes a tilting device secured to the user device and connecting the user device to the extension arm. Thus, the user device may be tilted to a desired orientation with the tilting device, providing an ergonomic configuration for the user.

In accordance with a further preferred embodiment of the present invention, a method of securing a user device to a workspace is provided. The method comprises providing an extension arm for positioning the user device relative to the workspace, the extension arm having an endcap at a first end thereof; connecting the user device to a second end of the extension arm; providing a mounting member for supporting the extension arm, the mounting member having a receptacle therein aligned along an axis, the receptacle being operable to receive a shaft of the endcap; providing a locking member for securing the extension arm to the mounting member, the locking member including a plurality of locking tabs for securing the locking member to the mounting member; inserting the locking member and the shaft of the first endcap within the receptacle; and engaging the locking tabs with a locking surface in the receptacle so that the locking surface prevents disengagement of the locking member and the shaft from the receptacle of the mounting member.

In one alternative, the method further includes inserting a bushing at least partly into the receptacle before inserting the shaft and the locking member into the receptacle. The bushing permits the extension arm to rotate about the axis to enable positioning of the user device about the workspace. Here, the bushing desirably has the locking surface disposed thereon. In another alternative, the method further includes securing the mounting member to the work surface so that access to the locking member in the receptacle is prevented.

In accordance with a further preferred embodiment of the present invention, an apparatus for locking an extension arm to a mounting member is provided. The extension arm positions a user device in a spaced-apart relationship from the mounting member. The extension arm has an endcap at a first end thereof. The mounting member has a receptacle therein. The receptacle includes a locking surface disposed therein and the receptacle is operable to receive the locking apparatus and a shaft of the endcap therein. The apparatus comprises a locking member operable to be connected to the shaft of the endcap. The locking member is operable to be at least partly received within the receptacle of the mounting member. The locking member has a central portion and a plurality of locking tabs. Each locking tab has a first end disposed on the central portion and a second end remote therefrom. The second end is operable to engage the locking surface within the receptacle to prevent removal of the locking member and the shaft of the endcap from the receptacle.

### BRIEF DESCRIPTION OF THE DRAWINGS

Figs. 1a-b illustrate views of an assembled extension arm and locking system in accordance with aspects of the present invention.

Figs. 2a-b illustrate exploded and partly assembled views of portions of the extension arm and locking system of Figs. 1a-b, illustrating a method of assembling such components in accordance with aspects of the present invention.

Figs. 3a-c illustrate several views of a locking member in accordance with aspects of the present invention.

Fig. 4 illustrates components of the extension arm and the locking system in accordance with aspects of the present invention.

Figs. 4a-b illustrate sectional views of portions of the extension arm and locking system of Figs. 1a-b and Fig. 4 in accordance with aspects of the present invention.

Fig. 5a illustrates a sectional view of the assembled extension arm and locking system illustrated in Figs. 1a-b.

Fig. 5b illustrates an enlarged sectional view of the assembled extension arm and locking system illustrated in Fig. 5a.

Fig. 6 illustrates an alternative locking system in accordance with aspects of the present invention.

### DETAILED DESCRIPTION

In describing the preferred embodiments of the invention illustrated in the appended drawings, specific terminology will be used for the sake of clarity. However, the invention is not intended to be limited to the specific terms used, and it is to be understood that each specific term includes all technical equivalents that operate in a similar manner to accomplish a similar purpose.

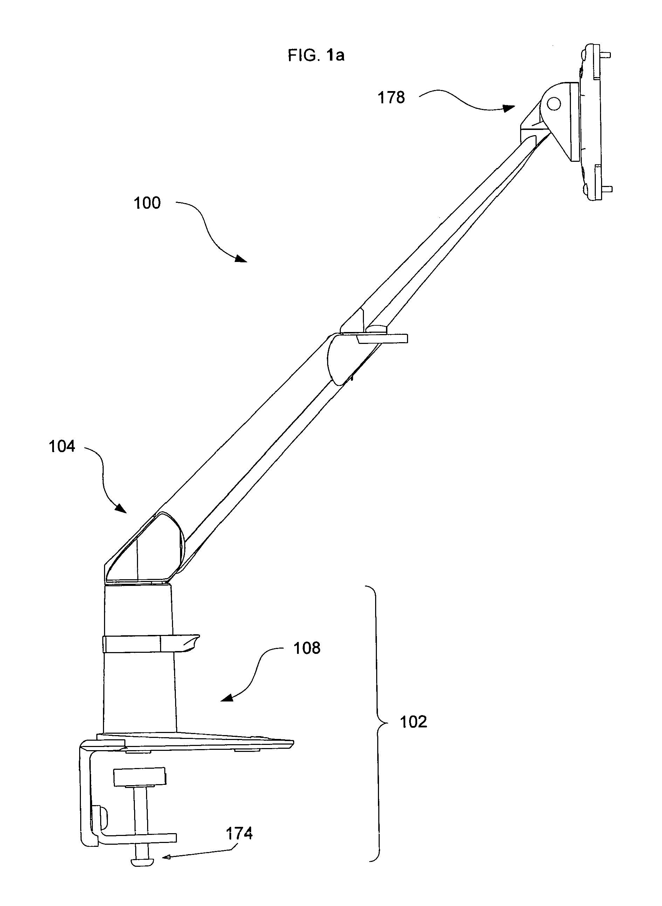

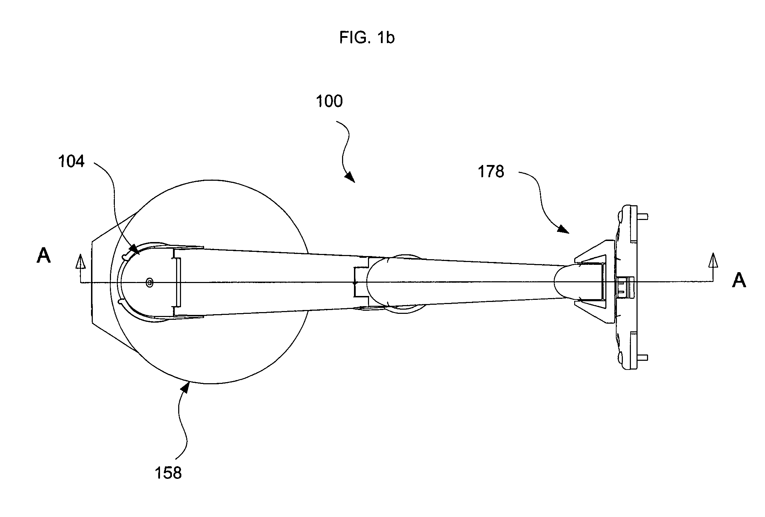

Figs. 1a-b illustrate a computer equipment extension arm 100 utilizing a locking system which will be explained in detail below. Features of the extension arm 100 are more fully described in above-referenced U.S. Patent Application No. 11/141,348, for example as shown in Figs. 8-29 and the accompanying description thereof. The extension arm 100 is connectable at one end to a computer monitor or other electronic device via a tilting device 178 and to a mounting assembly 102 at the other end. The mounting assembly 102 may be affixed to various workspace objects, including a piece of furniture such as a desk, a wall such as a slat wall, a section of an office cubicle, etc. The specific configuration of the mounting assembly 102 may be selected depending upon the particular type of workspace object it will connect to. For example, the mounting assembly 102 may be employed when connecting to a desk or other horizontal surface. In contrast, wall mounting assemblies such as those shown and described in U.S. Patent No. 7,066,435, the entire disclosure of which is hereby incorporated by reference, can be employed to connect to slat wall or other vertical surfaces.

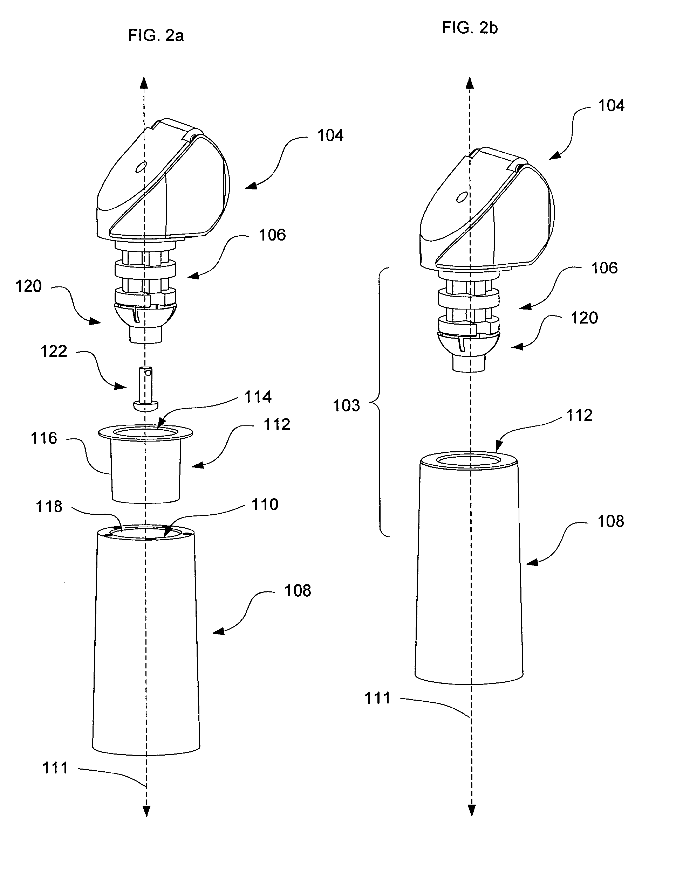

Figs. 2a and 2b illustrate exploded and partly assembled views of part of the mounting assembly 102 and locking system 103, which desirably includes a locking member 120 and one or more of a bushing 112, a fastener, a portion of shaft 106, and a portion of the mounting member 108. The extension arm 100 is connectable to the mounting assembly 102 by means of inserting the shaft 106 of the endcap 104 into the receptacle 110 in the mounting member 108.

The receptacle 110 is preferably aligned along an axis 111 of the mounting member 108. A bushing 112 is preferably disposed in the receptacle 110 between the shaft 106 and the inner surface 118 of the mounting member 108 in order to allow the shaft 106, and consequently the extension arm 100, to rotate easily about axis 111.

In order to allow the shaft 106 to rotate more easily, the inner surface 114 of the bushing 112 may be coated with PTFE, grease, or some other similar lubricating material. Additionally, in order to secure the bushing 112 to the mounting member 108, the bushing 112 may be sized so as to be press-fit into the receptacle 110, such that friction between the outer surface 116 of the bushing 112 and the inner surface 118 of the mounting member 108 may secure the bushing 112 in place. Alternatively, the outer surface 116 of the bushing may be coated with glue, cement, or some other adhesive substance.

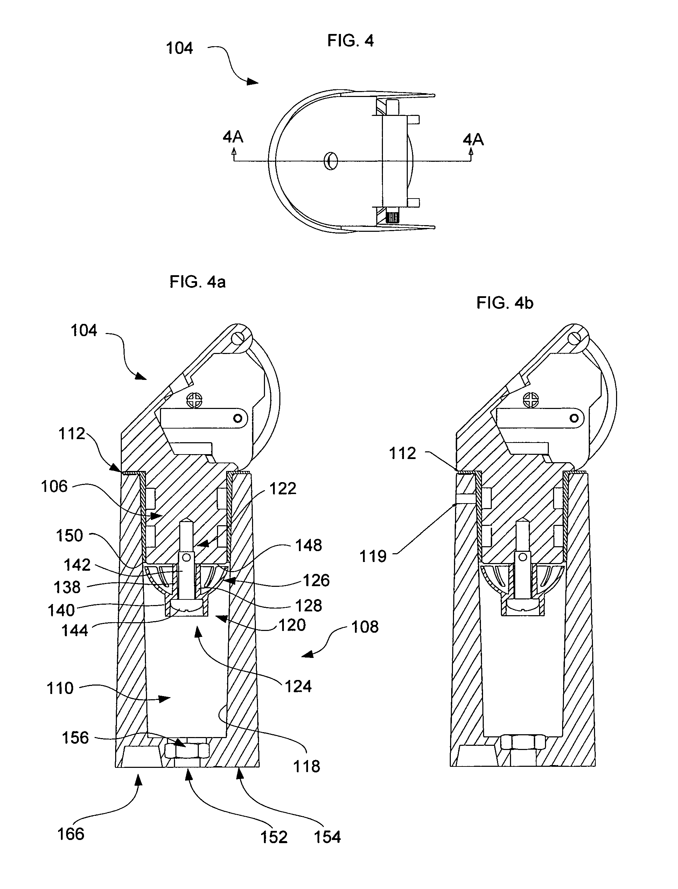

In another alternative embodiment, the bushing 112 may be fastened to the mounting member 108 by means of a set screw (not shown). The set screw may fit through a hole 119 disposed through the mounting member 108 (see Fig. 4b), where such screw may engage the outer surface 116 of the bushing 112. The bushing 112 may also include a series of teeth or ridges on the outer surface 116 for engaging the inner surface 118 of the mounting member 108.

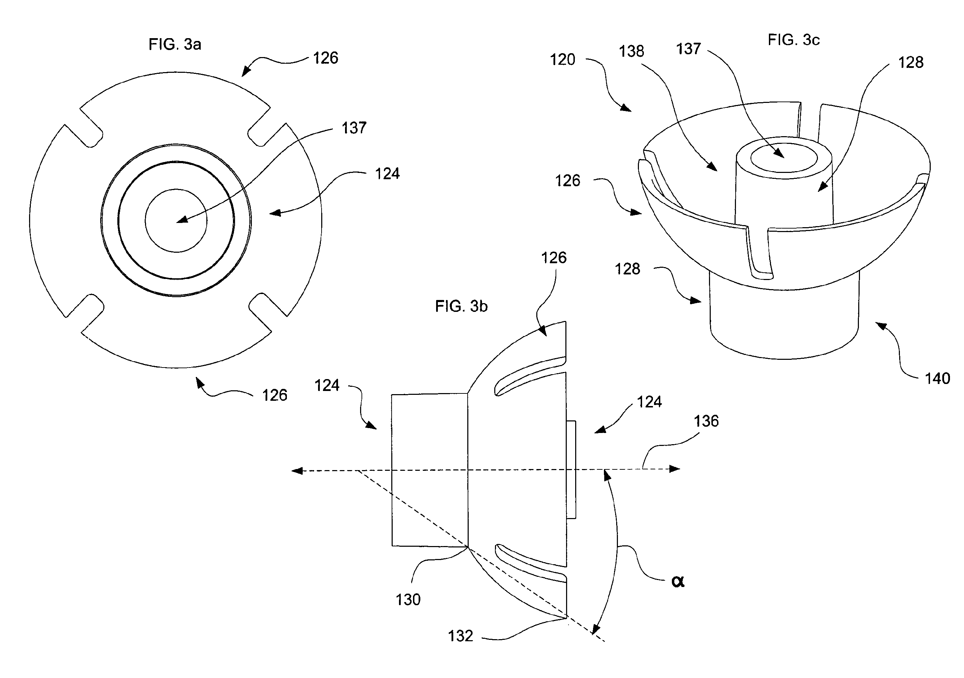

A locking member 120 may be disposed on the shaft 106 and attached by a fastener, such as a threaded bolt 122. Figs. 3a-c illustrate several views of the locking member 120 in detail. As shown, the locking member 120 preferably includes a central portion 124 and a plurality of locking tabs 126 disposed on the outer surface 128 of the central portion 124. Such locking tabs 126 preferably have a first end 130, which is disposed on the outer surface 128 of the central portion 124, and a second end 132 remote from the first end 130.

The locking tabs 126 are preferably flexible in a direction inwards towards the central axis 136. The locking tabs 126 may have an arcuate profile, as shown, or the profile of the tabs 126 may form a straight line from the first end 130 to the second end 132. A reference line 134 connecting the first end 130 and the second end 132 preferably forms an angle α with central axis 136, which angle may be between 0° and 90°. In one embodiment, the angle α is between 25° and 45°. Most preferably the angle α is on the order of 35°, for instance between 30° and 40°. The angle α may be selected so that the locking tabs 126 flex inward upon insertion and resist such flexing to prevent removal of the locking member 120 from the mounting member 108.

The central portion 124 may be adapted to receive a fastener, such as threaded bolt 122 (see Fig. 2a). In order to receive the fastener, the central portion 124 preferably includes a through hole 137, which may be aligned with axis 136. The fastener may then be used to attach the locking member 120 to the shaft 106 so that the central axis 136 of the locking member 120 may be aligned with the axis 111 of the mounting member 108.

Fig. 4 presents a top view of the endcap 104. Figs. 4a-b present cross-sectional views of taken along the 4A-4A line of Fig. 4. As shown in the cross-sectional views, the central portion 124 may be comprised of a first cylindrical portion 138 and a second cylindrical portion 140. The first cylindrical portion 138 may be adapted to receive the threaded portion 142 of threaded bolt 122, and may therefore have a smaller diameter than the second cylindrical portion 140, which may be adapted to receive the head 144 of threaded bolt 122.

After being received by the central portion 124 of the locking member 120, the threaded bolt 122 may be threadedly received by a receptacle such as recess disposed within surface 148 of the shaft 106, thereby fastening the locking member 120 to the shaft 106. By fastening the locking member 120 to the shaft 106, the locking member 120 will preferably rotate with the shaft 106.

In an alternative embodiment, the second cylindrical portion 140 may not be provided, leaving the head 144 of threaded bolt 122 exposed. Alternatively, other fasteners may be used, as would be apparent to those of ordinary skill in the art. Therefore, the central portion 124 may not be comprised of cylindrical portions, but may instead have other configurations and shapes, depending on the geometries of the alternative fasteners.

In yet another alternative, a separate fastener may not be included, and the central portion 124 may instead be secured directly to the shaft 106. For instance, the recess 146 may be adapted to receive the central portion 124 of the locking member 120. In this embodiment, the central portion 124 may include threads on the outer surface 128 thereof, and the locking member 120 may be thus threadedly secured to the shaft 106. Alternatively, the locking member 120 may be welded onto the exterior surface 148 of the shaft 106. In a further alternative, the shaft 106 may be manufactured as a single component which includes the locking member 120 integrally formed thereon. In this case, the locking member 120 may be cast as part of the shaft 106.

The shaft 106 and the locking member 120, depending on whether manufactured as a single component or as separate components, may be manufactured of different materials or of the same material. Various different materials may be used, including, but not limited to, metals such as aluminum, plastics such as polymers, or combinations thereof. Additionally, depending on the materials used, such components may be manufactured in a variety of different ways, including, but not limited to, casting, molding, or machining.

Figs. 4a-b illustrate sectional views of the mounting member 108 and the endcap 104 assembled together. As the shaft 106 is inserted into the receptacle 110 and the locking member 120 moves beyond the bushing 112 toward the base of the mounting member 108, the locking tabs 126 preferably flex away from the central portion 124. In this manner, the first surface 150 of the bushing 112 becomes a locking surface.

Consequently, when a longitudinal force is applied to the endcap 104, the second ends 132 of the locking tabs 126 may engage the locking surface and such surface may prevent the locking member 120 from continuing past the locking surface in the direction of the applied force. This, in turn, may preferably prevent the extension arm 100 from becoming disconnected from the mounting assembly 102. Additionally, this arrangement may substantially prevent tampering with the locking member 120, as the locking member 120 is disposed within the receptacle 110, where it may be difficult to access.

In an alternative embodiment, the bushing 112 may not be included. Instead, a locking surface may be disposed on the inner surface 118 of the mounting member 108. In this case, the locking surface is desirably integrally formed with the inner surface 118. Such a locking surface may have various different configurations, as would be as would be apparent to those of ordinary skill in the art. For instance, the locking surface may be configured as a protruding lip or a set of ratcheting teeth, which surfaces are operable to engage the second ends 132 of the locking tabs 126 in a manner similar to that described above with regard to the first surface 150 of the bushing 112.

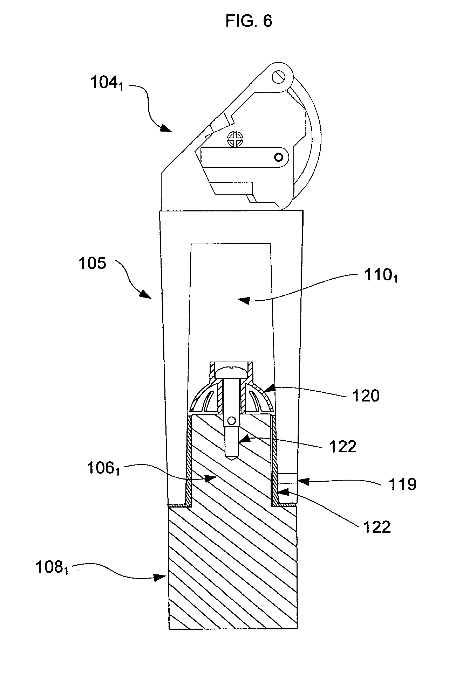

In a further alternative embodiment, the apparatus described above may be substantially inverted, as illustrated in Fig. 6. In this embodiment, a receptacle 110₁ may instead be disposed within the endcap 104₁, for example within a shaft 105 thereof, and the mounting member 108₁ or a shaft 106₁ on the mounting member 108₁ may be operable to fit within such receptacle 110₁. The locking member 120, in this orientation, may instead be disposed on the mounting member 108₁.

In this way, disengagement of the extension arm 100 from the mounting member may be prevented in substantially the same manner as that described above in other embodiments. Disposing the locking member 120 within a receptacle on the endcap may make such locking member 120 more accessible than in the configuration where the receptacle is in the mounting member. Depending on the configuration of the endcap, this may result in the locking member 120 being less tamper resistant than when the locking member 120 is disposed within the solid and unitary construction of the mounting member 108.

The mounting member 108 may be of any desired configuration, as would be apparent to those of ordinary skill in the art, provided that it is operable to support the extension arm 100 by securely engaging the shaft 106 of the endcap 104 within the receptacle 110. In one embodiment, as shown in Figs. 4a-b, the mounting member 108 may be a single manufactured piece having a substantially cup-shaped configuration.

The mounting member 108 may also include a base surface 154 operable to engage a work surface, such as a desk or a base member (not shown), and an opening 152 may be provided in such base surface 154. Such opening 152 is preferably aligned with the threaded bolt 122 and is preferably adapted to allow a screwdriver, or other tool, to access such bolt 122. The opening 152 may also include a threaded portion 156, such as a threaded nut. In order to detach the extension arm 100 from the mounting member 108, a tool may be inserted through the opening 152 and may loosen the bolt 122 until the locking member 120 disengages from the shaft 106.

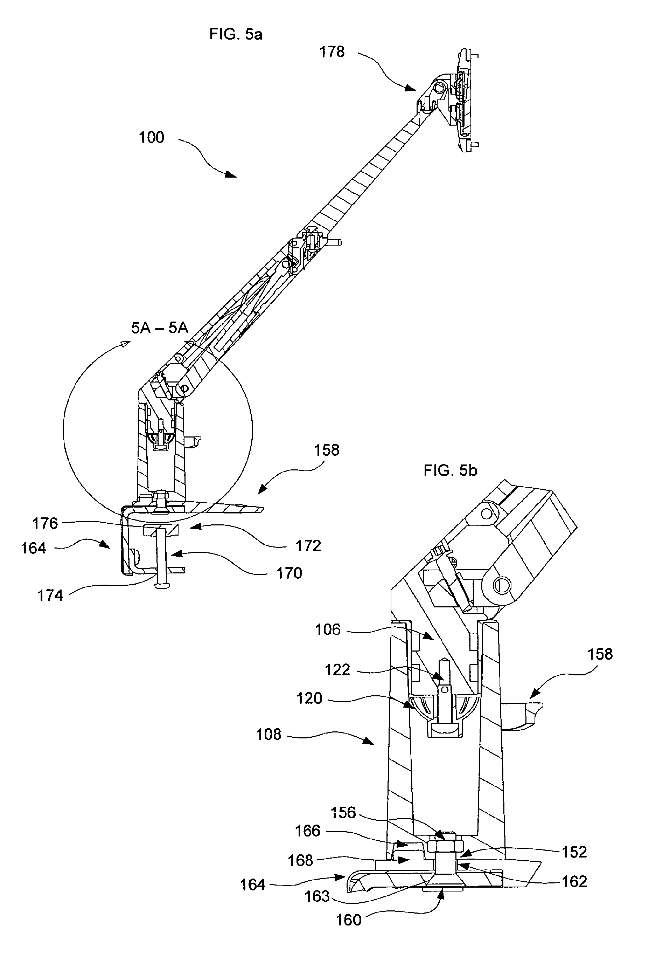

Fig. 5a illustrates a sectional view showing the extension arm 100, mounting member 108 and locking system 103 mounted to base member 158. Fig. 5b is an enlarged view of section 5A-5A of Fig. 5a. The base member 158 preferably provides stability to the mounting member 108, and it also prevents disengagement of the locking member 120 by covering up the opening 152, thus preventing easy access to the receptacle 110 via such opening 152.

In order to mount the mounting member 108 onto the base member 158, a fastener, such as a threaded bolt 160, may pass through an opening 162 in the base member 158 and be threadedly fastened into the threaded portion 156 of the opening 152. In an alternative embodiment, this same threaded bolt 160 may also pass through an opening 163 in a connecting member 164 in order to secure such connecting member 164 to the mounting member 108 and the base member 158.

In an alternative embodiment, the threaded bolt 160 may extend through the locking member 120, and the threaded bolt 160 may thus secure the locking member 120 to the shaft 106, instead of threaded bolt 122. In order to prevent the mounting member 108 from rotating independently of the base member 158, a recess 166 may be provided on the base surface 154 of the mounting member 108, as shown in Fig. 4a. Such recess 166 may correspond to a protrusion 168 disposed on the base member 158 which may be insertable therein.

As shown in Fig. 5a, the base member 158 may be a substantially flat member which is operable to engage a work surface such as a desk surface. The connecting member 164 may be comprised of a single L-shaped piece which is operable to secure the extension arm 100 to a surface, such as a wall or the side of a desk. Preferably, the connecting member 164 includes a plurality of holes, which may be operable to receive fasteners, such as screws or bolts, so that the connecting member 164 may be fastened to any of the aforementioned surfaces. Alternatively, the connecting member 164 or the base member 158 may be of any desired configuration, as would be apparent to those of ordinary skill in the art.

The mounting member 108 may also be connected to a clamping assembly 166. Such clamping assembly 166 may include the connecting member 164, a second connecting member 168, a clamping bolt 170, and a clamping pad 172. The second connecting member 162 may include a hole 174, into which the clamping bolt 170 may be insertable. The clamping pad 172 may be disposed on the tip 176 of the clamping bolt 170. The clamping assembly 166 may then be used to secure the extension arm 100 to a desk, or other piece of furniture, by tightening the clamping bolt 170 until the clamping pad 172 contacts the underside of such desk.

Alternatively, the mounting member 108 may be mounted directly onto a desk by inserting a hole in the surface of such desk. In this manner, the threaded bolt 160 may secure the mounting member 108 by passing through such hole in the surface of the desk and into the threaded portion 156 of the opening 152. In any of the previous alternatives, either the threaded bolt 160 or the clamping bolt 170 or both may include heads having specially shaped drive designs which require a specialized tool to loosen, thereby providing additional security from theft. Examples of such preferred drive designs include hexagonal socket ("Allen") head, TORX^{®} brand by Textron Innovations, Inc., TRI-WING^{®} or TORQ-SET^{®} brands by Phillips Screw Company, or spanner drives. For extra security, tamper resistant forms of the drive designs may be provided, which typically include a pin protruding in the center of the fastener head, such as with a pin and hex combination. Alternatively, the drive designs may be specifically created for use with this invention.

The user device (not shown) may be secured directly to the extension arm 100, or it may be secured to a tilting device 178, which is attached to the extension arm 100. In order to further secure the user device, such device may be fastened to the extension arm 100 or to the tilting device 178 by fasteners having specially shaped drive designs. Additionally, a quick release mechanism may be provided, such as that disclosed in pending U.S. Application No. 11/058,820, filed February 16, 2005, and entitled "Quick Release Assembly for an Electronic Device," the entire disclosure of which is fully incorporated by reference herein. If such a mechanism is included, additional security may be provided by including the threaded fastener described in the above referenced application, which fastener may prevent the user device from being quickly released from the extension arm. For further security, such threaded fastener may include a specially shaped drive design which requires a specialized tool to loosen.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. A locking apparatus for supporting an extension arm which positions a user device, the locking apparatus comprising:
a mounting member for supporting the extension arm, the mounting member having a receptacle therein aligned along an axis; and
a locking member for securing the extension arm to the mounting member, the locking member including a plurality of locking tabs for securing the locking member to the mounting member, the locking tabs being received within the receptacle of the mounting member.

2. The locking apparatus of claim 1, further including a locking surface disposed within the receptacle, the locking surface being operable to engage the locking tabs to prevent removal of the locking member from the receptacle.

3. The locking apparatus of claim 1, wherein each locking tab has a first end disposed on a central portion of the locking member and a second end remote therefrom.

4. The locking apparatus of claim 3, wherein each locking tab is substantially arcuate from the first end to the second end.

5. The locking apparatus of claim 2, further including a bushing at least partly disposed within the receptacle of the mounting member, the bushing being operable to permit the extension arm to rotate about the axis.

6. The locking apparatus of claim 5, wherein the bushing is secured to the mounting member by a set screw.

7. The locking apparatus of claim 5, wherein the locking surface is disposed on the bushing.

8. The locking apparatus of claim 7, wherein the bushing is operable to receive a shaft of an endcap of the extension arm.

9. The locking apparatus of claim 7, wherein each locking tab has a first end disposed on a central portion of the locking member and a second end remote therefrom, and each locking tab is substantially arcuate from the first end to the second end.

10. The locking apparatus of claim 1, wherein the mounting member further includes a threaded opening disposed on a base surface thereof for fastening the mounting member to a work surface.

11. The locking apparatus of claim 1, further including a connecting member attachable to the mounting member, whereby the mounting member may be fastened to a work surface with the connecting member.

12. The locking apparatus of claim 1, further including a clamping assembly attached to the mounting member, whereby the mounting member may be clamped to a workspace object.

13. A locking apparatus for supporting an extension arm that positions a user device relative to a workspace, the locking apparatus comprising:
a mounting member for supporting the extension arm, the mounting member being operable to engage an endcap of the extension arm; and
means for locking the endcap of the extension arm to the mounting member.

14. The locking apparatus of claim 13, wherein the locking means includes a locking member secured to the endcap, the locking member being at least partly received within a receptacle in the mounting member, the locking member including a plurality of locking tabs for securing the locking member to the mounting member, each locking tab having a first end disposed on a central portion of the locking member and a second end remote therefrom.

15. The locking apparatus of claim 14, wherein each locking tab is substantially arcuate from the first end to the second end.

16. The locking apparatus of claim 14, wherein the first end and the second end define a line therebetween, the line being at an angle of between 25º and 45º relative to the central portion.

17. The locking apparatus of claim 14, further including a bushing at least partly disposed within the receptacle of the mounting member, the bushing being operable to receive the shaft, the bushing being operable to permit the extension arm to rotate about an axis, the bushing having a locking surface disposed thereon, the locking surface being operable to engage the second ends of the locking tabs.

18. A system for securing and positioning a user device relative to a workspace, comprising:
an extension arm for positioning the user device relative to the workspace, the extension arm having an endcap at a first end thereof;
a mounting member for supporting the extension arm and for securing the extension arm to the workspace, the mounting member having a receptacle therein aligned along an axis, the receptacle being operable to receive a shaft of the endcap;
a locking member for securing the extension arm to the mounting member, the locking member being secured to the shaft of the endcap, the locking member including a plurality of locking tabs for securing the locking member to the mounting member when the locking tabs are received within the receptacle of the mounting member; and
a locking surface disposed within the receptacle, the locking surface being operable to engage the locking tabs to prevent removal of the locking member and the shaft of the endcap from the receptacle.

19. The system of claim 18, wherein the locking member is integrally formed with the shaft on the endcap of the extension arm.

20. The system of claim 18, wherein the locking member is affixedly secured to the shaft on the endcap of the extension arm.

21. The system of claim 20, wherein the locking member is secured to the shaft by a fastener.

22. The system of claim 18, further including an opening disposed on a base surface of the mounting member for fastening the mounting member to a surface of the workspace, the opening being operable to provide access to a release mechanism of the locking member for disengaging the locking tabs from the locking surface when the base surface is not fastened to the workspace surface.

23. The system of claim 18, further including a clamping assembly attached to the mounting member, whereby the mounting member may be attached to a workspace object, the clamping assembly including a clamping bolt for threadedly clamping onto the workspace object.

24. The system of claim 18, further including a tilting device secured to the user device and connecting the user device to the extension arm.

25. A method of securing a user device to a workspace, comprising:
providing an extension arm for positioning the user device relative to the workspace, the extension arm having an endcap at a first end thereof;
connecting the user device to a second end of the extension arm;
providing a mounting member for supporting the extension arm, the mounting member having a receptacle therein aligned along an axis, the receptacle being operable to receive a shaft of the endcap;
providing a locking member for securing the extension arm to the mounting member, the locking member including a plurality of locking tabs for securing the locking member to the mounting member;
inserting the locking member and the shaft of the first endcap within the receptacle; and
engaging the locking tabs with a locking surface in the receptacle so that the locking surface prevents disengagement of the locking member and the shaft from the receptacle of the mounting member.

26. The method of claim 25, further including inserting a bushing at least partly into the receptacle before inserting the shaft and the locking member into the receptacle, the bushing permitting the extension arm to rotate about the axis to enable positioning of the user device about the workspace, the bushing having the locking surface disposed thereon.

27. The method of claim 25, further including securing the mounting member to the work surface so that access to the locking member in the receptacle is prevented.

28. An apparatus for locking an extension arm to a mounting member, the extension arm positioning a user device apart from the mounting member, the extension arm having an endcap at a first end thereof, the mounting member having a receptacle therein, the receptacle including a locking surface disposed therein and the receptacle being operable to receive the locking apparatus and a shaft of the endcap therein, the apparatus comprising a locking member operable to be connected to the shaft of the endcap, the locking member being operable to be at least partly received within the receptacle of the mounting member, the locking member having a central portion and a plurality of locking tabs, each locking tab having a first end disposed on the central portion and a second end remote therefrom, the second end being operable to engage the locking surface within the receptacle to prevent removal of the locking member and the shaft of the endcap from the receptacle.
